# EUROPEAN PATENT SPECIFICATION

(11) **EP 2 471 691 B1**
(45) Date of publication and mention of the grant of the patent: **01.10.2014**
(21) Application number: 10845415.8
(22) Date of filing: 23.08.2010
(51) Int. Cl.: B60R 21/00, G06T 1/00, B60R 1/00, H04N 7/18

(54) **OBSTACLE DETECTION DEVICE, OBSTACLE DETECTION SYSTEM PROVIDED THEREWITH, AND OBSTACLE DETECTION METHOD**
HINDERNISERKENNUNGSVORRICHTUNG, DAMIT AUSGESTATTETES HINDERNISERKENNUNGSSYSTEM UND HINDERNISERKENNUNGSVERFAHREN
DISPOSITIF DE DÉTECTION D'OBSTACLE, SYSTÈME DE DÉTECTION D'OBSTACLE ÉQUIPÉ DE CE DISPOSITIF ET PROCÉDÉ DE DÉTECTION D'OBSTACLE

(30) Priority: 02.03.2010 JP 2010045290
(43) Date of publication of application: 04.07.2012
(73) Proprietor: Panasonic Corporation, Kadoma-shi Osaka 571-8501 (JP)
(72) Inventor: MURAMATSU, Hirokazu, Osaka-shi, Osaka 540-6207 (JP); TOYODA, Keiji, Osaka-shi, Osaka 540-6207 (JP)
(74) Representative: Kügele, Bernhard
(86) International application number: PCT/JP2010/005172
(87) International publication number: WO 2011/108039

(56) References cited:
- JP-A- 2004 356 869
- JP-A- 2005 178 576
- JP-A- 2006 248 247
- JP-A- 2006 259 895
- JP-A- 2007 243 463
- JP-A- 2007 243 463
- JP-A- 2007 243 464
- JP-A- 2007 320 390
- US-A1- 2002 180 870
- US-A1- 2008 266 396

## Description

### TECHNICAL FIELD

The present invention relates to an obstacle detection apparatus that detects obstacles, an obstacle detection system including the obstacle detection apparatus, and an obstacle detection method. More particularly, the present invention relates to an obstacle detection apparatus for detecting an obstacle present at the rear of a vehicle in a low illumination environment, an obstacle detection system including the obstacle detection apparatus, and an obstacle detection method. An obstacle detection apparatus according to the preamble of present claim 1 is disclosed by the document US 2008/0266396 A.

### BACKGROUND ART

In recent years, vehicle-mounted cameras have been widely used. A vehicle-mounted camera is mounted on a vehicle for the purpose of supporting safe driving. In particular, upon backing up of the vehicle, if a driver visually checks a rear area of the vehicle, the driver is put in an unnatural posture, which makes it difficult for him/her to perform driving operations. Hence, a rear view system is widely employed in which upon backing up of the vehicle the rear area of the vehicle is shot with the vehicle-mounted camera and a video is displayed on a monitor at the driver's seat. By providing, by the rear view system, the driver with a video of the rear area of the vehicle obtained by the vehicle-mounted camera, the driver can also check conditions in a range that cannot be visually checked from the driver's seat. As such, by the rear view system, upon backing up of the vehicle, the driver can visually determine, through the monitor, in a comfortable posture whether there is an obstacle such as a pedestrian or a solid object present at the rear of the vehicle.

However, in the rear view system, there is likelihood that in a low illumination environment, in particular, nighttime, etc., the sufficient performance of the vehicle-mounted camera cannot be exerted and thus only an unclear video can be presented. Hence, only presenting a video of the rear area of the vehicle is not sufficient for the driver to determine whether there is an obstacle, resulting in the possibility of the driver overlooking the presence of an obstacle.

In regard to such a problem, Patent Document 1 introduces a technique in which, in addition to a camera that shoots the rear area of a vehicle, a sensor using ultrasonic waves, radio waves, a laser, etc., is also used, whereby at nighttime a determination as to whether there is an obstacle is made using sensor information instead of a camera video, and whether there is an obstacle is presented with a video.

Patent Document 1: Japanese Patent Application Laid-Open No. 2002-029345

### SUMMARY OF THE INVENTION

### PROBLEMS TO BE SOLVED BY THE INVENTION

However, in the conventional technique, since a sensor is required in addition to a camera, there are problems that the cost increases and vehicle installation becomes cumbersome. In addition, in recent years, there has been a trend that the camera uses a fisheye lens, etc., to present a wide angle image. Thus, there is a problem that, to perform scanning within the full range of the wide view angle with a laser sensor, etc., to detect an obstacle, a plurality of sensors are required.

The present invention is made to solve the problems in the conventional technique, and an object of the present invention is to provide an obstacle detection apparatus capable of detecting an obstacle present at the rear of a vehicle even in a low illumination environment, without the need for a sensor other than a camera, and provide an obstacle detection system including the obstacle detection apparatus, and an obstacle detection method.

### MEANS FOR SOLVING THE PROBLEMS

The obstacle detection apparatus of claim 1, the system of claim 6 and the method of claim 8 are provided for this purpose.

In the above-described obstacle detection apparatus, the obstacle determining unit may obtain rudder angle information of the vehicle from the vehicle, and determine according to the rudder angle information whether there is an obstacle, targeting only a vehicle traveling region in an image where there is a possibility that the vehicle travels.

The above-described obstacle detection apparatus may obtain information on an on/off state of the brake lights of the vehicle from the vehicle, and based on the information on an on/off state of the brake lights, the difference image creating unit may create a difference image between an image captured when the brake lights of the vehicle are on and an image captured when the brake lights of the vehicle are off.

In the above-described obstacle detection apparatus, the difference image creating unit may create a difference image representing a difference in red component in images.

The above-described obstacle detection apparatus may further include a block dividing unit that divides an image into a plurality of blocks and determines a representative value for each block, and the difference image creating unit may obtain, as the difference image, a difference between a representative value for each block in an image captured when the brake lights of the vehicle are on, and a representative value for each block in an image captured when the brake lights of the vehicle are off, the representative values being determined by the block dividing unit.

An obstacle detection system is configured to include: an imaging apparatus that shoots a rear area of a vehicle upon backing up of the vehicle; and the above-described obstacle detection apparatus that detects an obstacle from an image captured with the imaging apparatus.

In the above-described obstacle detection system, the imaging apparatus may be configured to include an exposure control mechanism that controls an exposure condition of the imaging apparatus such that an image obtained when brake lights are on and an image obtained when the brake lights are off have a same exposure condition, the images creating a difference image in a difference image creating unit.

### EFFECT OF THE INVENTION

According to the present invention, to detect an obstacle present at the rear of a vehicle, an imaging apparatus and brake lights which are originally installed in the vehicle are used. Thus, an excellent effect is provided of the ability to detect an obstacle present at the rear of the vehicle even in a low illumination environment, without the need for an additional sensor other than the imaging apparatus.

As will be described below, the present invention has other aspects. Therefore, the disclosure of the invention is intended to provide a part of the present invention and is not intended to limit the scope of the invention described and claimed herein.

### BRIEF DESCRIPTION OF THE DRAWINGS

FIG. 1 is a block diagram showing a schematic configuration of an obstacle detection system of a first embodiment of the present invention.
FIG. 2 is a diagram showing a method of extracting a specific color when red is the specific color, in the embodiment of the present invention.
FIG. 3 is a diagram showing an example of block division in the embodiment of the present invention.
FIG. 4A is a diagram showing a current frame divided into blocks in the embodiment of the present invention, FIG. 4B is a diagram showing a previous frame divided into blocks in the embodiment of the present invention, and FIG. 4C is a diagram showing a difference image in the embodiment of the present invention.
FIG. 5A is a diagram showing a difference image in the embodiment of the present invention, and FIG. 5B is a diagram showing a result of a difference threshold process in the embodiment of the present invention.
FIG. 6A is a diagram showing an example of a video frame obtained when brake lights are off in the embodiment of the present invention, FIG. 6B is a diagram showing an example of a video frame obtained when the brake lights are on in the embodiment of the present invention, FIG. 6C is a diagram showing blocks with differences in the embodiment of the present invention, and FIG. 6D is a diagram showing a result of extraction of blocks with differences in the embodiment of the present invention.
FIG. 7 is an operational flowchart of an obstacle detection apparatus in the embodiment of the present invention.
FIG. 8 is a block diagram showing a schematic configuration of an obstacle detection system of a second embodiment of the present invention.
FIG. 9A is a diagram showing an extraction target region for when backing up straight in the embodiment of the present invention, FIG. 9B is a diagram showing an extraction target region for when backing up with a steering wheel turned to the left in the embodiment of the present invention, and FIG. 9C is a diagram showing an extraction target region for when backing up with the steering wheel turned to the right in the embodiment of the present invention.

### MODE FOR CARRYING OUT THE INVENTION

A detailed description of the present invention is provided below. Embodiments described below are merely examples of the present invention and thus the present invention can be modified in various ways. Therefore, specific configurations and functions disclosed below do not limit the scope of claims.

An obstacle detection apparatus that detects, upon backing up of a vehicle, an obstacle from an image of a rear area of the vehicle is configured to include: a difference image creating unit that creates a difference image between an image captured when brake lights of the vehicle are on and an image captured when the brake lights of the vehicle are off; and an obstacle determining unit that determines whether there is an obstacle, based on a location in an image where a difference occurs in the difference image. By this configuration, since an imaging apparatus and brake lights which are originally installed in a vehicle are used to detect an obstacle present at the rear of the vehicle, even in a low illumination environment, an obstacle present at the rear of the vehicle can be detected without the need for an additional sensor other than the imaging apparatus.

In the above-described obstacle detection apparatus, the obstacle determining unit may determine that there is an obstacle, when a difference in images occurs in a portion above a position of a horizontal line in an image. By this configuration, an obstacle above a certain height present on a road can be detected.

In the above-described obstacle detection apparatus, the obstacle determining unit may obtain rudder angle information of the vehicle from the vehicle, and determine according to the rudder angle information whether there is an obstacle, targeting only a vehicle traveling region in an image where there is a possibility that the vehicle travels. By this configuration, only obstacles having the risk of collision can be detected in an image captured with the imaging apparatus, and the driver can be alerted.

The above-described obstacle detection apparatus may obtain information on an on/off state of the brake lights of the vehicle from the vehicle, and based on the information on an on/off state of the brake lights, the difference image creating unit may create a difference image between an image captured when the brake lights of the vehicle are on and an image captured when the brake lights of the vehicle are off. By this configuration, video frames respectively obtained when the brake lights are on and off during shooting can be determined.

In the above-described obstacle detection apparatus, the difference image creating unit may create a difference image representing a difference in red component in images. By this configuration, differences in images occurring with the movement of the vehicle can be prevented from being created as a difference image, and differences in images occurring due to the difference between the on and off of the brake lights can be created as a difference image.

The above-described obstacle detection apparatus may further include a block dividing unit that divides an image into a plurality of blocks and determines a representative value for each block, and the difference image creating unit may obtain, as the difference image, a difference between a representative value for each block in an image captured when the brake lights of the vehicle are on, and a representative value for each block in an image captured when the brake lights of the vehicle are off, the representative values being determined by the block dividing unit. By this configuration, it is not necessary to store all pixel values in a video and it only needs to store representative values for the respective blocks. Thus, the storage memory capacity can be saved and incidental differences such as noise components in an image can be prevented from being created as a difference image.

An obstacle detection system is configured to include: an imaging apparatus that shoots a rear area of a vehicle upon backing up of the vehicle; and the above-described obstacle detection apparatus that detects an obstacle from an image captured with the imaging apparatus. By this configuration, since the imaging apparatus and brake lights which are originally installed in a vehicle are used to detect an obstacle present at the rear of the vehicle, even in a low illumination environment, an obstacle present at the rear of the vehicle can be detected without the need for an additional sensor other than the imaging apparatus. The various configurations of the above-described obstacle detection apparatus can also be applied to the obstacle detection system.

In the above-described obstacle detection system, the imaging apparatus may be configured to include an exposure control mechanism that controls an exposure condition of the imaging apparatus such that an image obtained when brake lights are on and an image obtained when the brake lights are off have a same exposure condition, the images creating a difference image in a difference image creating unit. By this configuration, differences in images occurring due to the illumination of the brake lights can be created as a difference image.

An obstacle detection method for detecting, upon backing up of a vehicle, an obstacle from an image of a rear area of the vehicle is configured to include: a difference image creating step of creating a difference image between an image captured when brake lights of the vehicle are on and an image captured when the brake lights of the vehicle are off; and an obstacle determining step of determining whether there is an obstacle, based on a location in an image where a difference occurs in the difference image. By this configuration, since an image of the rear area of a vehicle and brake lights which are originally installed in the vehicle are used to detect an obstacle present at the rear of the vehicle, even in a low illumination environment, an obstacle present at the rear of the vehicle can be detected without the need for an additional sensor other than an imaging apparatus. The various configurations of the above-described obstacle detection apparatus can also be applied to the obstacle detection method.

An obstacle detection program is configured to cause an obstacle detection apparatus that detects, upon backing up of a vehicle, an obstacle from an image of a rear area of the vehicle to perform: a difference image creating step of creating a difference image between an image captured when brake lights of the vehicle are on and an image captured when the brake lights of the vehicle are off; and an obstacle determining step of determining whether there is an obstacle, based on a location in an image where a difference occurs in the difference image.

Obstacle detection systems of embodiments of the present invention will be described below with reference to the drawings.

### (First Embodiment)

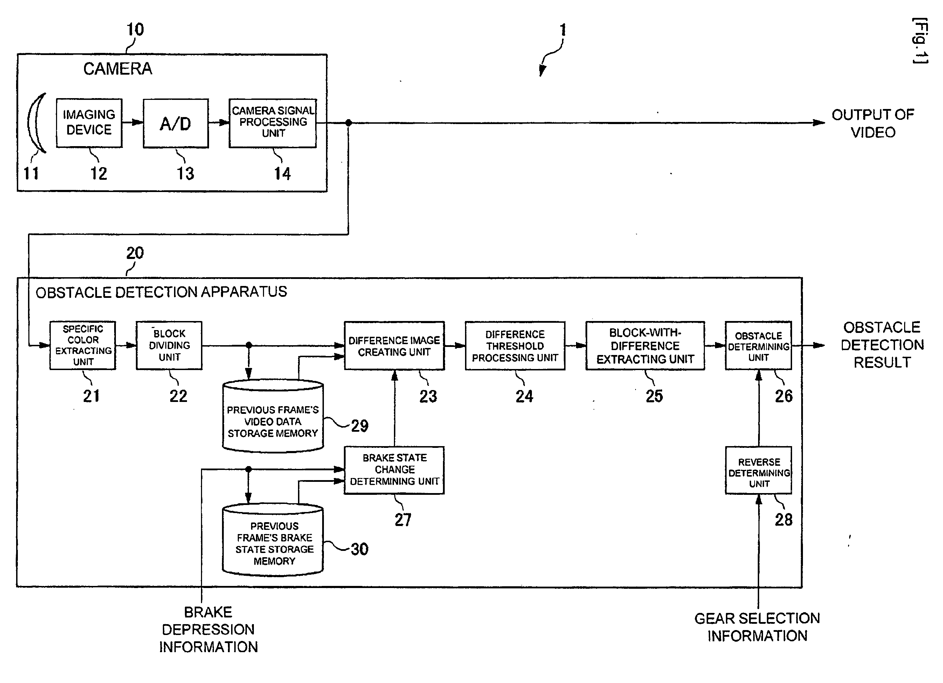

FIG. 1 is a diagram showing a configuration of an obstacle detection system of a first embodiment. An obstacle detection system 1 includes a camera 10 serving as an imaging apparatus that captures a subject and outputs a video signal; and an obstacle detection apparatus 20 that detects obstacles. The camera 10 is mounted at a predetermined location of the rear of a vehicle around a number plate and at a predetermined angle, so that the camera 10 can shoot a rear area of the vehicle.

The camera 10 includes a lens 11, an imaging device 12, an A/D converter 13, and a camera signal processing unit 14, and shoots a subject present at the rear of the vehicle and thereby generates a video signal. The lens 11 forms an image from light from a subject onto the imaging device 12. The imaging device 12 photoelectrically converts the formed image and outputs an analog signal. The A/D converter 13 converts the analog signal output from the imaging device 12 into a digital signal. The camera signal processing unit 14 performs camera signal processing on the A/D converted digital signal to generate a video signal. The camera signal processing unit 14 performs general video signal processing, including OB subtraction, white balance adjustment, noise reduction, etc., in addition to signal processing, including generation of luminance signals, generation of color signals, generation of aperture signals, etc. Note that in the present embodiment the camera 10 outputs a video signal composed of 640 pixels horizontally by 480 pixels vertically.

The obstacle detection apparatus 20 includes a specific color extracting unit 21, a block dividing unit 22, a difference image creating unit 23, a difference threshold processing unit 24, a block-with-difference extracting unit 25, an obstacle determining unit 26, a brake state change determining unit 27, a reverse determining unit 28, a previous frame's video data storage memory 29, and a previous frame's brake state storage memory 30. The obstacle detection apparatus 20 performs detection of an obstacle based on a video signal input from the camera 10 and driving state information input from the vehicle. Here, the driving state information includes brake depression information and gear selection information. The brake depression information is information indicating whether the brake lights are turned on by a driver stepping on a brake pedal. The gear selection information is information indicating a selected gear position. The obstacle detection apparatus 20 obtains these pieces of driving state information through an in-vehicle network such as a LIN (Local Interconnect Network) or a CAN (Controller Area Network).

The specific color extracting unit 21 determines colors in an image in a video signal which is an output from the camera 10, and extracts only a subject in a specific color from the image. In the present embodiment, since the brake lights are red, the specific color extracting unit 21 extracts a subject in red. When the video signal is a YUV signal, the specific color extracting unit 21 determines a specific color by determining whether a UV signal value which is a color component is present in a specific color range.

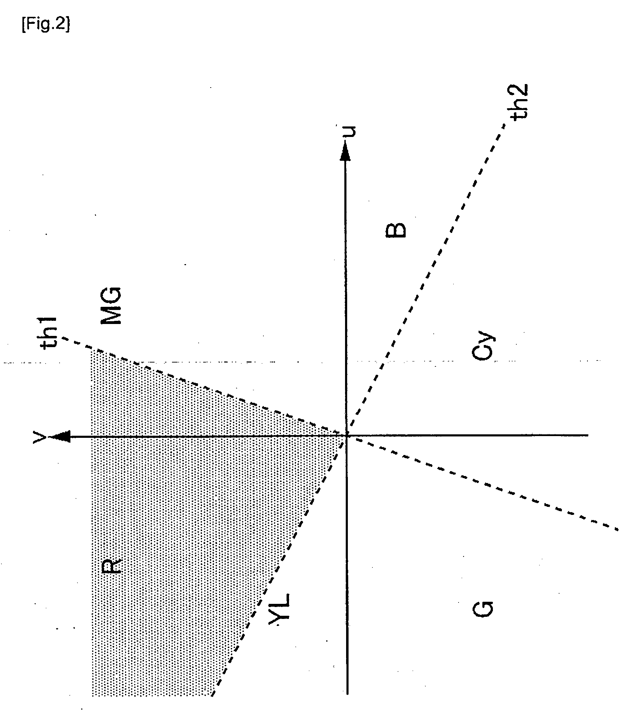

FIG. 2 is a diagram showing an example of a method of determining a red component by a UV signal value. The specific color extracting unit 21 sets threshold values th1 and th2 which mark off a red region in the UV color space. If the UV value of a target pixel is present in the red region enclosed by th1 and th2, then the specific color extracting unit 21 determines that the target pixel is a red pixel. If the UV value of the target pixel is not present in the red region, then the target pixel is not a red pixel and thus the pixel value in the video signal is invalidated (e.g., the pixel value is set to 0). By this, only red components in the video signal can remain.

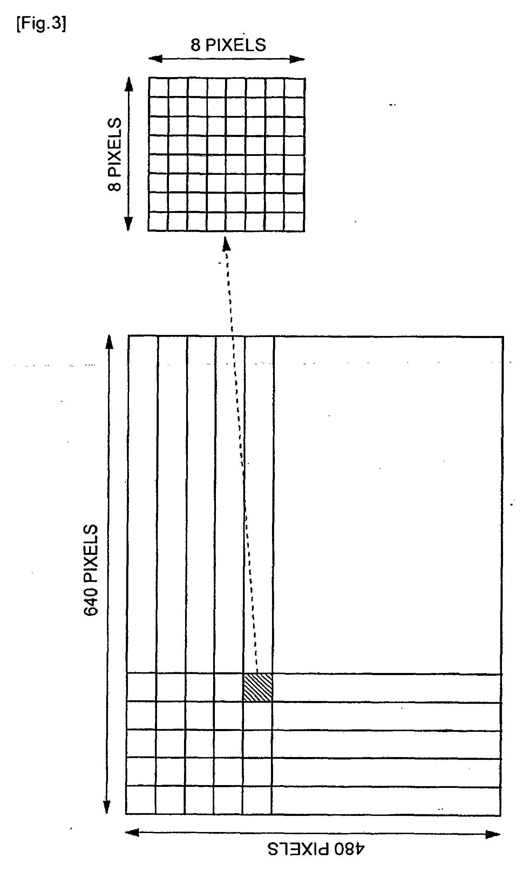

FIG. 3 is a diagram showing an example of dividing an image on a block basis. The block dividing unit 22 divides an image on a block basis, each block having a predetermined number of pixels, and calculates a representative value for each block. As shown in FIG. 3, the block dividing unit 22 divides an image composed of 640 pixels horizontally by 480 pixels vertically which is output from the camera 10, into a plurality of blocks, each having a total of 64 pixels, 8 pixels horizontally by 8 pixels vertically. By the block division, an image of a one-frame is divided into 4800 blocks.

The block dividing unit 22 calculates, for each block, one representative value from pixels included in that block. The representative values calculated here are used in processes performed after the block dividing unit 22. For the representative values, a mean value or a mode value of pixels included in each block can be used. In particular, when mean values are used, since they provide the effect of removing noise components included in an image, it is highly effective for noise in a low illumination environment such as nighttime, which leads to an improvement in detection performance.

The representative values for the respective blocks calculated by the block dividing unit 22 are input to the difference image creating unit 23 and the previous frame's video data storage memory 29. The previous frame's video data storage memory 29 saves the representative values for the respective blocks in a one-frame video.

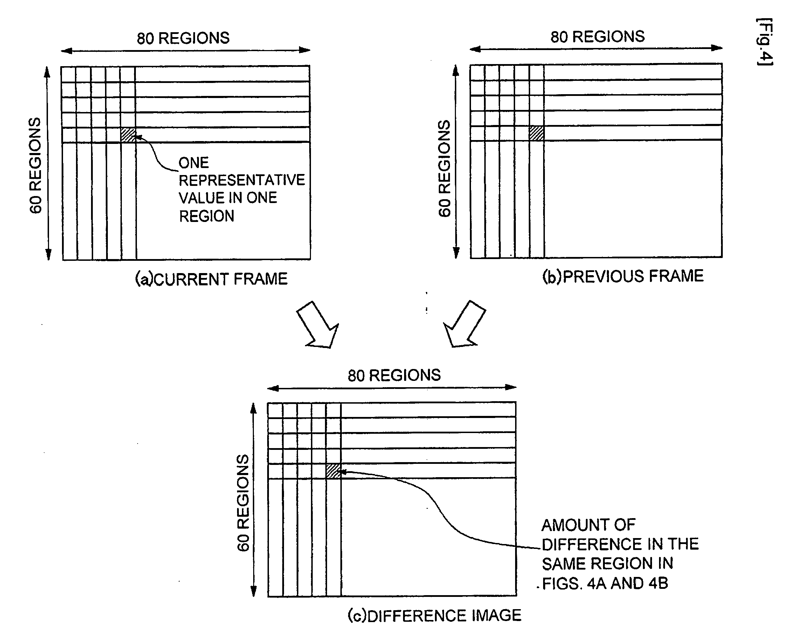

FIGS. 4A to 4C are diagrams for describing creation of a difference image. As shown in FIGS. 4A to 4C, the difference image creating unit 23 determines, for each block, a difference between a representative value for each block calculated by the block dividing unit 22 (FIG. 4A) and a representative value for each block in a past frame (previous frame) stored in the previous frame's video data storage memory 29 (FIG. 4B), and thereby creates a difference image (FIG. 4C). Namely, differences in representative value between different frames to be determined are also of the same number as the number of blocks. By creating a difference image by taking differences between different frames, a change in image between two frames can be known.

The difference image creating unit 23 does not create a difference image between frames for all frames, but creates a difference image between frames only when the brake state has been changed. To do so, the obstacle detection apparatus 20 obtains brake depression information from the vehicle, and inputs the brake depression information to the brake state change determining unit 27 and stores the brake depression information in the previous frame's brake state storage memory 30. The brake state change determining unit 27 determines whether there is a change in brake state by comparing a current brake state obtained from the vehicle and a past brake state stored in the previous frame' s brake state storage memory 30. Specifically, the brake state change determining unit 27 determines that there has been a change in brake state, when the state changes from one in which the brake pedal is depressed by the driver to one in which the brake pedal is not depressed, and in contrast when the state changes from one in which the brake pedal is not depressed to one in which the brake pedal is depressed. The brake state change determining unit 27 notifies the difference image creating unit 23 when there has been a change in brake state.

When the difference image creating unit 23 receives notification that there has been a change in brake state, the difference image creating unit 23 creates, in the manner described above, a difference image between a current frame input from the block dividing unit 22 and a past frame stored in the previous frame's video data storage memory 29. Here, the previous frame's video data storage memory 29 and the previous frame's brake state storage memory 30 respectively store video data and a brake state for the same frame. Thus, the previous frame's brake state storage memory 30 stores information on whether shooting has been performed with the brake being depressed (the brake lights being on) or with the brake being not depressed (the brake lights being off), for the frame stored in the previous frame' s video data storage memory 29. By this, the difference image creating unit 23 can calculate differences in images occurring due to the brake lights' illumination state, and can prevent erroneous detection of an obstacle in a situation in which there is no obstacle, because the difference image creating unit 23 does not consider, as a processing target, differences in images occurring due to the movement of a car body or the movement of a subject, irrespective of the state of the brake lights.

The difference threshold processing unit 24 performs a difference threshold process on the difference image created by the difference image creating unit 23. Specifically, the difference threshold processing unit 24 performs a difference threshold process on a difference value for each block of the difference image. Here, the difference threshold process is a process in which it is determined whether a difference value for each block is greater or smaller than a predetermined threshold value diffTH, and if the difference value is greater than or equal to the threshold value diffTH then the block is determined to be a block having a difference (a block with a difference), and if the difference value is smaller than the threshold value diffTH then the block is determined to be a block having no difference (a block with no difference).

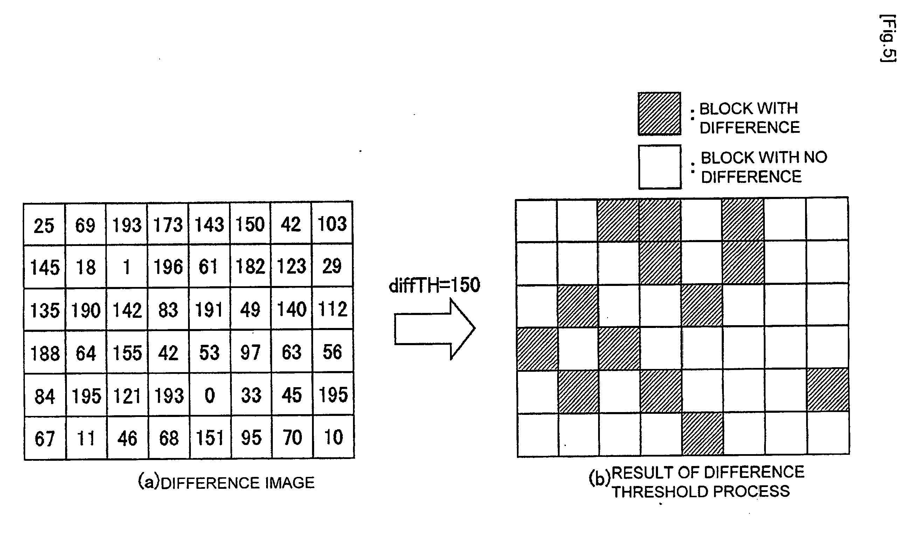

FIGS. 5A and 5B are schematic diagrams for describing a specific example of the difference threshold process. When a difference threshold process is performed on difference values for the respective blocks calculated as shown in FIG. 5A, with threshold value diffTH = 150, blocks in a difference image are distinguished between blocks with differences and blocks with no differences, as shown in FIG. 5B. By appropriately adjusting the threshold value diffTH, for example, very small differences occurring due to noise components in an image or very small differences resulting from displacement of a subject caused by driving of the vehicle between frames can be eliminated. Thus, differences in images occurring due to a change in the illumination of the brake lights can be suitably extracted.

The block-with-difference extracting unit 25 extracts blocks with differences from the result of the threshold process performed by the difference threshold processing unit 24, with only a region in a video frame that is required to detect an obstacle being set as an extraction target region. In the present embodiment, since the aim is to detect an obstacle above a certain height present on a road, the block-with-difference extracting unit 25 detects a horizontal line in an image and sets a region that is a portion above the position of the horizontal line as an extraction target region.

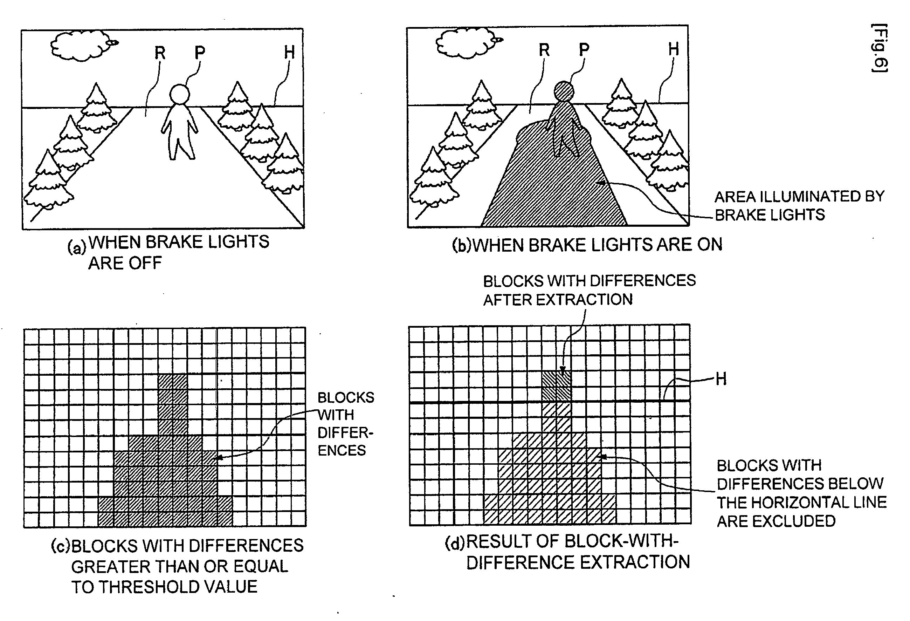

FIGS. 6A to 6D are diagrams for describing a block-with-difference extraction process performed by the block-with-difference extracting unit 25. FIGS. 6A to 6D show an example of extracting blocks with differences in a scene where a pedestrian P, an obstacle, is present on a road R. FIG. 6A shows a video frame shot when the brake lights are off, and FIG. 6B shows a video frame shot when the brake lights are on. A hatched portion in FIG. 6B indicates an area where the brightness has been changed by the turning on of the brake lights. In the example of FIG. 6B, a part of the road R and the pedestrian P are illuminated by the brake lights.

FIG. 6C shows the result of a difference threshold process performed by dividing the video frames into blocks and then taking differences between the video frame in FIG. 6A and the video frame in FIG. 6B. As shown in FIG. 6C, by switching the brake lights on and off, differences also occur in the region of the road R which is not an obstacle. Hence, the block-with-difference extracting unit 25 extracts only those blocks with differences present in a region above a horizontal line H (an extraction target region) from the result shown in FIG. 6C, not taking into account a region below the horizontal line H in the video, i.e., excluding those blocks with differences present in the region below the horizontal line H. The result of the extraction is as shown in FIG. 6D, and only those blocks with differences occurring due to (a head portion of) the pedestrian P, an obstacle, remain. Suppose the case in which the pedestrian P is not present in FIGS. 6A to 6D. In FIG. 6C, all the blocks with differences are present in the region below the horizontal line H, resulting in that there are no blocks with differences to be finally extracted.

The obstacle determining unit 26 makes a final determination as to whether there is an obstacle, based on an extraction result obtained by the block-with-difference extracting unit 25 and an output from the reverse determining unit 28. The reverse determining unit 28 obtains current gear selection information from the vehicle to determine whether the gear is in reverse. The obstacle determining unit 26 determines that there is an obstacle, when the currently selected gear is in reverse and the extraction result obtained by the block-with-difference extracting unit 25 has a block(s) with a difference(s).

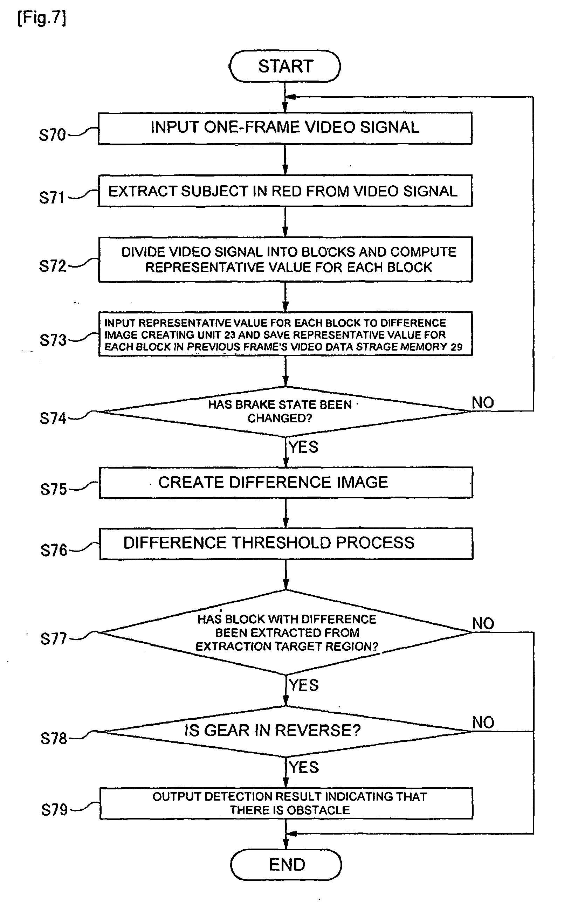

The operation of the obstacle detection apparatus 20 in the obstacle detection system 1 configured in the above-described manner will be described using FIG. 7. The obstacle detection apparatus 20 accepts as input a video signal from the camera 10 frame by frame (step S70). The specific color extracting unit 21 extracts a subject in red from an image of the frame (step S71). Then, the block dividing unit 22 divides the video signal of one frame into blocks of a predetermined size and computes a mean value of the red components of pixels included in each block, as a representative value for each block (step S72). Subsequently, the representative values for the respective blocks for the one frame are input to the difference image creating unit 23 and are saved in the previous frame's video data storage memory 29 (step S73).

These processes are performed for each video signal of one frame input from the camera 10, until a change occurs in brake state. Specifically, it is determined whether the brake state has been changed (step S74). If there is no change (NO at step S74), then processing returns to step S70 and steps S70 to S73 are repeated for a video signal of the next frame.

If there has been a change in brake state (YES at step S74), then a difference value is determined for each block between a frame obtained after the brake state has been changed and a frame obtained before the brake state has been changed which is stored in the previous frame's video data storage memory 29 (i.e., a difference image is created) (step S75). Then, a difference threshold process is performed on each block, in which a block with a difference value greater than or equal to a predetermined threshold value is determined to be a block with a difference, and a block with a difference value less than the predetermined threshold value is determined to be a block with no difference (step S76).

Subsequently, by extracting a block(s) with a difference(s) from a region above a horizontal line H (an extraction target region) in the image, it is determined whether there is (are) a block(s) with a difference (s) in the extraction target region (step S77). If there is a block(s) with a difference (s) in the extraction target region (YES at step S77), then it is determined whether the gear is in reverse, based on gear selection information (step S78). If, at step S78, the gear is in reverse (YES at step S78), then a detection result indicating that there is an obstacle is output (step S79). If, at step S77, there is no block with a difference in the extraction target region (NO at step S77) and if, at step S78, the gear is not in reverse (NO at step S78), then an obstacle detection result is not output.

According to such an obstacle detection system of the first embodiment, an obstacle present at the rear of the vehicle at nighttime is detected by using differences in images between when the brake lights are on and when the brake lights are off. When the vehicle backs up, a video of the rear area of the vehicle is output, and at the same time, the presence/absence of an obstacle present in the video can be presented to the driver.

### (Second Embodiment)

An obstacle detection system of a second embodiment of the present invention will be described below with reference to drawings.

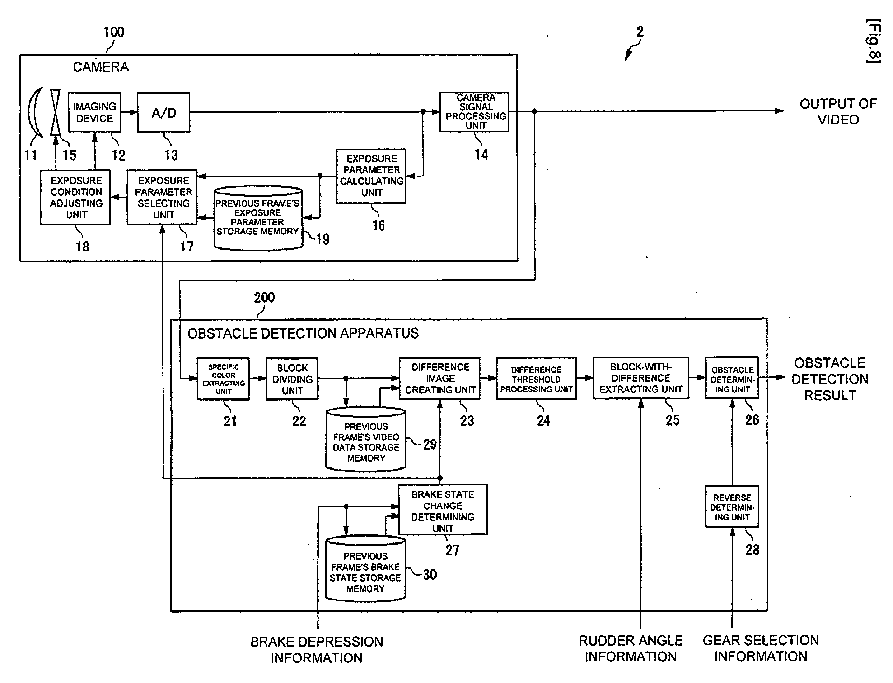

FIG. 8 is a diagram showing a configuration of the obstacle detection system of the second embodiment. An obstacle detection system 2 includes a camera 100 serving as an imaging apparatus that captures a subject and thereby generates a video signal; and an obstacle detection apparatus 200 that detects obstacles. The camera 100 is mounted at a predetermined location of the rear of a vehicle around a number plate and at a predetermined angle. In the obstacle detection system 2 of the present embodiment, those elements denoted by the same reference numerals as those in the obstacle detection system 1 of the first embodiment have the same configurations as the corresponding elements of the obstacle detection system 1 of the first embodiment.

The camera 100 includes a lens 11, a diaphragm 15, an imaging device 12, an A/D converter 13, a camera signal processing unit 14, an exposure parameter calculating unit 16, an exposure parameter selecting unit 17, an exposure condition adjusting unit 18, and a previous frame's exposure parameter storage memory 19. The camera 100 shoots a subject at the rear of the vehicle and thereby generates a video signal. Light having passed through the lens 11 is adjusted in its amount by the diaphragm 15, and forms an image on the imaging device 12. The imaging device 12 photoelectrically converts the formed image and outputs an analog signal. The A/D converter 13 converts the analog signal output from the imaging device 12 into a digital signal. The camera signal processing unit 14 performs camera signal processing on the A/D converted digital signal to generate a video signal.

The obstacle detection apparatus 200 includes a specific color extracting unit 21, a block dividing unit 22, a difference image creating unit 23, a difference threshold processing unit 24, a block-with-difference extracting unit 25, an obstacle determining unit 26, a brake state change determining unit 27, a reverse determining unit 28, a previous frame's video data storage memory 29, and a previous frame's brake state storage memory 30. The obstacle detection apparatus 200 performs detection of an obstacle based on a video signal output from the camera 100 and driving state information. The driving state information of the present embodiment includes rudder angle information in addition to brake depression information and gear selection information. The rudder angle information is information indicating the turning angle of a steering wheel or tires, and is information indicating the traveling direction of the vehicle.

In the present embodiment, portions different than the first embodiment will be particularly described below. Compared with the first embodiment, the present embodiment is **characterized in that** the exposure condition of the camera 100 is controlled in conjunction with the detection of an obstacle by the obstacle detection apparatus 200, and that a region from which blocks with differences are extracted is variable according to the rudder angle of the vehicle, which will be described below in turn.

The obstacle detection system 2 of the present embodiment has a configuration (an exposure control mechanism) for controlling the exposure condition of the camera 100 in conjunction with the detection of an obstacle by the obstacle detection apparatus 200. First, exposure control will be described. The exposure control refers to an adjustment made to the exposure condition of the imaging apparatus so as to obtain an appropriate amount of light from a subject that is received by the imaging device 12. In the exposure control, for example, with a mean value of the pixel values of all pixels in one frame or a mean value of the pixel values of pixels present at the center of the screen being the amount of exposure, the exposure condition is adjusted such that the amount of exposure has an appropriate value.

In the exposure control, a predetermined amount of exposure is determined in advance as a target value. If the amount of exposure for the current video frame is smaller than the target value, then the exposure condition is adjusted to increase the amount of exposure. In contrast, if the amount of exposure is larger than the target value, then the exposure condition is adjusted to reduce the amount of exposure. An adjustment to the exposure condition can be made by adjusting the aperture size of the diaphragm 15 or the amplification gain of the amount of light in the imaging device 12. Specifically, when an image is too dark, the diaphragm 15 is opened and/or the amplification gain of the amount of light in the imaging device 12 is increased, to brighten the image. In contrast, when an image is too bright, the diaphragm 15 is narrowed and/or the amplification gain of the amount of light in the imaging device 12 is reduced, to darken the image.

In the obstacle detection system 2 of the present embodiment, the camera 100 includes, as an exposure control mechanism, the exposure parameter calculating unit 16, the exposure parameter selecting unit 17, the exposure condition adjusting unit 18, and the previous frame's exposure parameter storage memory 19. By the camera 100 performing the above-described exposure control, the camera 100 provides the driver with a video comfortable to view. However, when creating a difference image between an image captured when the brake lights are on and an image captured when brake lights are off, it is not desirable to perform exposure control such as that described above. This is because, when exposure control is performed between a frame obtained when the brake lights are on and a frame obtained when the brake lights are off, depending on the amount of adjustment to the exposure condition, relatively large differences may also occur in a subject portion that is not illuminated by the brake lights, and thus, a subject which is not an obstacle may be erroneously detected as an obstacle. Hence, in the present embodiment, exposure control such as that described above is performed at normal times, and exposure control such as that described above is not performed when creating a difference image. Namely, a difference image is created between a frame obtained when the brake lights are on and a frame obtained when the brake lights are off, but exposure control is not performed between the frame obtained when the brake lights are on and the frame obtained when the brake lights are off so that the two frames have the same exposure condition. A configuration for this will be described below.

The exposure parameter calculating unit 16 determines an exposure parameter based on an A/D converted digital signal, such that a subject is captured at an appropriate brightness. Here, the exposure parameter is a parameter to determine the exposure condition of the camera 100. The exposure parameter includes a parameter for the aperture size of the diaphragm 15 and a parameter for the amplification gain amount of the amount of light in the imaging device 12. Note that the exposure parameter may include only the parameter for the aperture size of the diaphragm 15 or may include only the parameter for the amplification gain of the amount of light in the imaging device 12. The exposure parameter determined by the exposure parameter calculating unit 16 is sent to the exposure parameter selecting unit 17 and the previous frame' s exposure parameter storage memory 19. The previous frame's exposure parameter storage memory 19 stores an exposure parameter on a one--frame video signal basis.

The exposure parameter selecting unit 17 is notified from the brake state change determining unit 27 about a change in brake state. Based on the information on the change in brake state which is notified from the brake state change determining unit 27, the exposure parameter selecting unit 17 selects one of an exposure parameter input from the exposure parameter calculating unit 16, i.e., an exposure parameter determined in a current frame, and an exposure parameter input from the previous frame's exposure parameter storage memory 19, i.e., an exposure parameter determined in a past frame. Specifically, when the brake state change determining unit 27 determines that the brake state has been changed, and the exposure parameter selecting unit 17 receives notification about the change in brake state, the exposure parameter selecting unit 17 selects the exposure parameter from the previous frame's exposure parameter storage memory 19. Otherwise, the exposure parameter selecting unit 17 selects the exposure parameter from the exposure parameter calculating unit 16. Namely, when the on/off state of the brake lights has been changed, the exposure parameter selecting unit 17 selects, for a video frame after the change, the same exposure parameter as that in a video frame before the change. The exposure parameter selecting unit 17 outputs the selected exposure parameter to the exposure condition adjusting unit 18.

The exposure condition adjusting unit 18 adjusts the amount of exposure based on the exposure parameter selected by the exposure parameter selecting unit 17, by increasing or reducing the aperture size of the diaphragm 15 or the amplification gain amount of the amount of light in the imaging device 12. By this, the exposure parameter can be fixed before and after the on/off state of the brake lights has been changed. Thus, differences between video frames occurring due to exposure adjustment are not present, which makes it easier to properly determine differences between video frames occurring due to a change in the illumination of the brake lights.

Note that an exposure parameter stored in the previous frame's exposure parameter storage memory 19 is associated with a video frame saved in the previous frame's video data storage memory 29 and information on a brake state stored in the previous frame's brake state storage memory 30, and thus, the pieces of information stored in the three storage memory are information for the same frame. Control of the amount of exposure performed in conjunction with the detection of an obstacle has been described above.

Next, a change to an extraction target region for blocks with differences according to the rudder angle will be described. In the present embodiment, rudder angle information is input to the block-with-difference extracting unit 25 from the vehicle. The block-with-difference extracting unit 25 changes a region (an extraction target region) from which blocks with differences are extracted, based on the rudder angle information. Although in the first embodiment a region above a horizontal line H is an extraction target region, in the present embodiment the extraction target region is further narrowed down to a specific extraction area. Specifically, in the present embodiment, by using the rudder angle information, the block-with-difference extracting unit 25 sets only a partial region according to the traveling direction of the vehicle in the region above the horizontal line H, as an extraction target region for blocks with differences. Note that, as with brake depression information and gear selection information, rudder angle information is input, as a type of driving state information, to the block-with-difference extracting unit 25 through an in-vehicle network such as a LIN or a CAN.

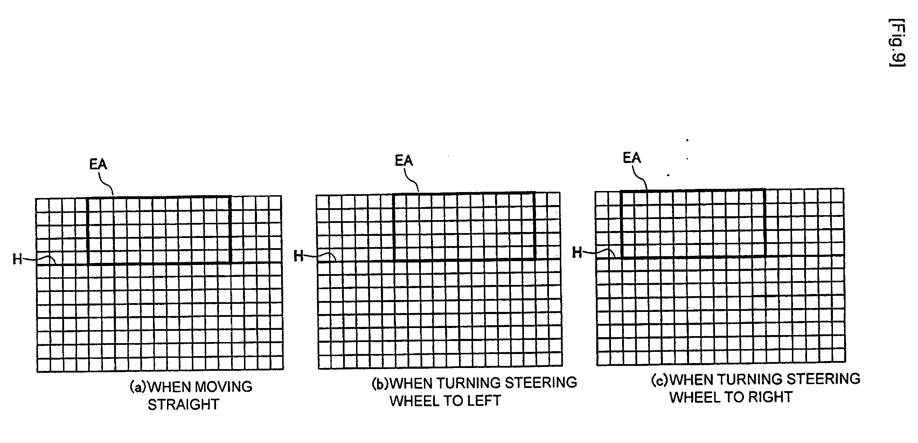

FIGS. 9A to 9C are diagrams showing examples of a change to the extraction target region according to the rudder angle of the steering wheel. FIG. 9A is a diagram showing an extraction target region for when backing up straight (a rudder angle of 0°). When the steering wheel is not turned, the block-with-difference extracting unit 25 sets a region above the horizontal line H and in the vicinity of the horizontal center as an extraction target region EA for blocks with differences. FIG. 9B is a diagram showing an extraction target region for when backing up with the steering wheel turned to the left (a rudder angle of x° in a counterclockwise direction). When the steering wheel is turned to the left, the block-with-difference extracting unit 25 sets a region above the horizontal line H and on the right side of the horizontal center as an extraction target region EA for blocks with differences. Here, since a video of the rear area of the vehicle is a mirror-inverted video, when the steering wheel is turned to the left, the traveling direction upon backing up of the vehicle is on the right side of the screen.

FIG. 9C is a diagram showing an extraction target region for when backing up with the steering wheel turned to the right (a rudder angle of x° in a clockwise direction). When the steering wheel is turned to the right, the block-with-difference extracting unit 25 sets a region above the horizontal line H and on the left side of the horizontal center as an extraction target region EA for blocks with differences. When the steering wheel is turned to the right, the traveling direction upon backing up of the vehicle is on the left side of the screen. The block-with-difference extracting unit 25 changes the amount by which the extraction target region EA for blocks with differences is shifted to the right or left, according to the rudder angle. By this configuration, since an obstacle can be detected targeting only a direction in which the vehicle travels by the current vehicle's rudder angle, more accurate obstacle detection is enabled.

As described above, according to the obstacle detection system including the obstacle detection apparatus of the second embodiment, at normal times the amount of exposure is adjusted so that the driver can be provided with a video comfortable to view, and when the lighting state of the brake lights are changed and a difference image is created, the exposure parameter is not changed between video frames, between which differences are taken, and thus erroneous detection that a subject which is not an obstacle is detected as an obstacle due to the adjustment to the amount of exposure can be reduced. In addition, in the obstacle detection system of the second embodiment, the extraction target region for blocks with differences is changed according to the vehicle' s rudder angle so as not to detect an obstacle in a region where there is no possibility of vehicle collisions. Thus, erroneous detection in a region where there is no possibility of vehicle collisions can be prevented, enabling more accurate obstacle detection.

Although the first and second embodiments of the present invention are described above, the present invention is not limited to these embodiments.

For example, although the above-described embodiments describe an example of extracting red components from an image of a video frame, red does not necessarily need to be extracted. For example, when the imaging apparatus does not have an IR (Infrared) cut filter which blocks infrared light, the brake lights are not always be captured in red due to the influence of infrared light and are captured in white in some cases. In this case, if only red components are targeted, then differences occurring due to the brake lights may not be properly determined. Thus, it is effective to specify the color component to be extracted as necessary.

In addition, although in the above-described embodiments the number of block divisions is 80 regions horizontally by 60 regions vertically, the number of divisions is not limited thereto. The larger the number of divisions, the more possible it becomes to detect small obstacles.

In addition, in the above-described embodiments, the storage of previous frame's video data does not need to be updated every frame. Depending on the frame rate of the imaging apparatus, switching of the brake lights on and off may not be completed in one frame period, and thus, differences may not be sufficiently determined with a difference image with one frame difference. In this case, instead of storing video data on a frame basis, video data can be stored every several frames. At this time, a previous frame' s brake state is also stored every several frames in accordance with video data.

In addition, although in the above-described embodiments the block-with-difference extracting unit 25 detects a horizontal line in an image and determines an extraction target region, the extraction target region may be fixed regardless of an image. In addition, only when a horizontal line is not shown in an image and thus a horizontal line cannot be extracted, a fixed horizontal line may be employed. Assuming that the vehicle is on a level road with no obstacles, the range in which the brake lights reach on the road is limited. Taking also into account a difference threshold process of the above-described embodiments, the distance at which a block where reflected light of the brake lights from the road is captured is determined to be a block with a difference at nighttime is limited. Hence, the position of the fixed horizontal line can be set taking into consideration the illumination angle and illumination intensity of the brake lights, the assumed darkness of nighttime, the threshold value used in a difference threshold process, and the like.

Since the present invention aims to detect, upon backing up of the vehicle, an obstacle present at the rear of the vehicle, a method of detecting an obstacle is used only when the reverse gear is selected. However, when an obstacle present at the rear of the vehicle needs to be detected at all times, a configuration in which information obtained by the reverse determining unit 28 is not used may be employed. In contrast, reverse determination may be performed at the initial stage. Specifically, the imaging apparatus may refer to gear selection information and allow the camera and the obstacle detection apparatus to operate only when the reverse gear is selected, and may not allow the camera and the obstacle detection apparatus to operate at all when the reverse gear is not selected.

In addition, although in the above-described embodiments a change in the state of the brake lights is indirectly determined by detecting whether there is a depression of the brake pedal, a change in the state of the brake lights may be directly detected, instead of by whether there is a depression of the brake pedal. In this case, when there has been a change in the state of the brake lights, i.e., when the brake lights have changed from on to off or from off to on, the difference image creating unit 23 computes differences between video frames obtained in the respective states of the brake lights.

In addition, although, in the above-described embodiments, an imaging apparatus and an obstacle detection apparatus are configured as separate units and as a whole compose an obstacle detection system, an imaging apparatus and an obstacle detection apparatus may be configured as a single unit. In the present application, such a single unit composed of an imaging apparatus and an obstacle detection apparatus is also called an obstacle detection system.

While there has been described what is considered at the present time to be the preferred embodiments of the present invention, it will be understood that various modifications may be made therein without departing from the scope of the present invention and it is intended to cover in the appended claims all such modifications.

### INDUSTRIAL APPLICABILITY

As described above, obstacle detection systems according to the present invention use an imaging apparatus and brake lights which are originally installed in a vehicle, to detect an obstacle present at the rear of the vehicle. Thus, the obstacle detection systems have an excellent effect of the ability to detect an obstacle present at the rear of the vehicle even in a low illumination environment, without the need for an additional sensor other than the imaging apparatus. Accordingly, the obstacle detection systems are useful as obstacle detection systems, etc., to detect an obstacle present at the rear of the vehicle in a low illumination environment.

### DESCRIPTION OF REFERENCE NUMERALS

1, 2: OBSTACLE DETECTION SYSTEM
10, 100: CAMERA
11: LENS
12: IMAGING DEVICE
13: A/D CONVERTER
14: CAMERA SIGNAL PROCESSING UNIT
15: DIAPHRAGM
16: EXPOSURE PARAMETER CALCULATING UNIT
17: EXPOSURE PARAMETER SELECTING UNIT
18: EXPOSURE CONDITION ADJUSTING UNIT
19: PREVIOUS FRAME'S EXPOSURE PARAMETER STORAGE MEMORY
20 and 200: OBSTACLE DETECTION APPARATUS
21: SPECIFIC COLOR EXTRACTING UNIT
22: BLOCK DIVIDING UNIT
23: DIFFERENCE IMAGE CREATING UNIT
24: DIFFERENCE THRESHOLD PROCESSING UNIT
25: BLOCK-WITH-DIFFERENCE EXTRACTING UNIT
26: OBSTACLE DETERMINING UNIT
27: BRAKE STATE CHANGE DETERMINING UNIT
28: REVERSE DETERMINING UNIT
29: PREVIOUS FRAME'S VIDEO DATA STORAGE MEMORY
30: PREVIOUS FRAME'S BRAKE STATE STORAGE MEMORY

## Claims

1. An obstacle detection apparatus (20) that detects, upon backing up of a vehicle, an obstacle from an image of a rear area of the vehicle, the obstacle detection apparatus comprising:
a difference image creating unit (23) that creates a difference image between an image captured when brake lights of the vehicle are on and an image captured when the brake lights of the vehicle are off; and
an obstacle determining unit (26) that determines whether there is an obstacle, based on a location in an image where a difference occurs in the difference image,
**characterised in that**
the obstacle determining unit (26) determines that there is an obstacle, when a difference in images occurs in a portion above a position of a horizontal line in an image.

2. The obstacle detection apparatus according to claim 1, wherein the obstacle determining unit (26) obtains rudder angle information of the vehicle from the vehicle, and determines according to the rudder angle information whether there is an obstacle, targeting only a vehicle traveling region in an image where there is a possibility that the vehicle travels.

3. The obstacle detection apparatus according to any one of claims 1 to 2, wherein
the obstacle detection apparatus obtains information on an on/off state of the brake lights of the vehicle from the vehicle, and
based on the information on an on/off state of the brake lights, the difference image creating unit creates a difference image between an image captured when the brake lights of the vehicle are on and an image captured when the brake lights of the vehicle are off.

4. The obstacle detection apparatus according to any one of claims 1 to 3, wherein the difference image creating unit (23) creates a difference image representing a difference in red component in an image.

5. The obstacle detection apparatus according to any one of claims 1 to 4, further comprising a block dividing unit (22) that divides an image into a plurality of blocks and determines a representative value for each block, wherein
the difference image creating unit (23) obtains, as the difference image, a difference between a representative value for each block in an image captured when the brake lights of the vehicle are on, and a representative value for each block in an image captured when the brake lights of the vehicle are off, the representative values being determined by the block dividing unit.

6. An obstacle detection system comprising:
an imaging apparatus that shoots a rear area of a vehicle upon backing up of the vehicle; and
an obstacle detection apparatus according to any one of claims 1 to 5 that detects an obstacle from an image captured with the imaging apparatus.

7. The obstacle detection system according to claim 6, wherein the imaging apparatus includes an exposure control mechanism that controls an exposure condition of the imaging apparatus such that an image obtained when brake lights are on and an image obtained when the brake lights are off have a same exposure condition, the images creating a difference image in a difference image creating unit.

8. An obstacle detection method for detecting, upon backing up of a vehicle, an obstacle from an image of a rear area of the vehicle, the method comprising:
a difference image creating step of creating a difference image between an image captured when brake lights of the vehicle are on and an image captured when the brake lights of the vehicle are off; and
an obstacle determining step of determining whether there is an obstacle, based on a location in an image where a difference occurs in the difference image,
**characterised in that** the obstacle determining step determines that there is an obstacle, when a difference in images occurs in a portion above a position of a horizontal line in an image.

## Patentansprüche

1. Hinderniserkennungsvorrichtung (20), die beim Rückwärtsfahren eines Fahrzeugs ein Hindernis von einem Bild eines hinteren Bereichs des Fahrzeugs erkennt, wobei die Hinderniserkennungsvorrichtung Folgendes umfasst:
eine Differenzbild-Erzeugungseinheit (23), die ein Differenzbild zwischen einem Bild, das erfasst wird, wenn die Bremslichter des Fahrzeugs eingeschaltet sind, und einem Bild erzeugt, das erfasst wird, wenn die Bremslichter des Fahrzeugs ausgeschaltet sind; und
eine Hindernisbestimmungseinheit (26), die auf der Grundlage einer Stelle in einem Bild, an der ein Unterschied im Differenzbild auftritt, bestimmt, ob ein Hindernis vorhanden ist,
**dadurch gekennzeichnet, dass**
die Hindernisbestimmungseinheit (26) bestimmt, dass ein Hindernis vorhanden ist, wenn eine Differenz in Bildern in einem Abschnitt oberhalb einer Position einer horizontalen Linie in einem Bild auftritt.

2. Hinderniserkennungsvorrichtung nach Anspruch 1, wobei die Hindernisbestimmungseinheit (26) Ruderwinkelinformationen des Fahrzeugs von dem Fahrzeug erhält und gemäß den Ruderwinkelinformationen bestimmt, ob ein Hindernis vorhanden ist, wobei nur auf eine Fahrzeugbewegungsregion in einem Bild gezielt wird, wo eine Möglichkeit besteht, dass sich das Fahrzeug bewegt.

3. Hinderniserkennungsvorrichtung nach einem der Ansprüche 1 bis 2, wobei:
die Hinderniserkennungsvorrichtung Informationen über einen ein/ausgeschalteten Zustand der Bremslichter des Fahrzeugs von dem Fahrzeug erhält, und
die Differenzbild-Erzeugungseinheit auf der Grundlage der Informationen über einen ein/ausgeschalteten Zustand der Bremslichter ein Differenzbild zwischen einem Bild, das erfasst wird, wenn die Bremslichter des Fahrzeugs eingeschaltet sind, und einem Bild erzeugt, das erfasst wird, wenn die Bremslichter des Fahrzeugs ausgeschaltet sind.

4. Hinderniserkennungsvorrichtung nach einem der Ansprüche 1 bis 3, wobei die Differenzbild-Erzeugungseinheit (23) ein Differenzbild erzeugt, das eine Differenz in einer roten Komponente in einem Bild darstellt.

5. Hinderniserkennungsvorrichtung nach einem der Ansprüche 1 bis 4, die ferner eine Blockunterteilungseinheit (22) umfasst, die ein Bild in mehrere Blöcke unterteilt und einen repräsentativen Wert für jeden Block bestimmt, wobei
die Differenzbild-Erzeugungseinheit (23) als das Differenzbild eine Differenz zwischen einem repräsentativen Wert für jeden Block in einem Bild, das erfasst wird, wenn die Bremslichter des Fahrzeugs eingeschaltet sind, und einem repräsentativen Wert für jeden Block in einem Bild erhält, das erfasst wird, wenn die Bremslichter des Fahrzeugs ausgeschaltet sind, wobei die repräsentativen Werte durch die Blockunterteilungseinheit bestimmt werden.

6. Hinderniserkennungssystem, das Folgendes umfasst:
eine Bilderzeugungsvorrichtung, die beim Rückwärtsfahren des Fahrzeugs einen hinteren Bereich eines Fahrzeugs aufnimmt; und
eine Hinderniserkennungsvorrichtung nach einem der Ansprüche 1 bis 5, die ein Hindernis von einem mit der Bilderzeugungsvorrichtung erfassten Bild ermittelt.

7. Hinderniserkennungssystem nach Anspruch 6, wobei die Bilderzeugungsvorrichtung einen Belichtungssteuerungsmechanismus umfasst, der einen Belichtungszustand der Bilderzeugungsvorrichtung steuert, derart, dass ein Bild, das erhalten wird, wenn die Bremslichter eingeschaltet sind, und ein Bild, das erhalten wird, wenn die Bremslichter ausgeschaltet sind, einen selben Belichtungszustand aufweisen, wobei die Bilder ein Differenzbild in einer Differenzbild-Erzeugungseinheit erzeugen.

8. Hinderniserkennungsverfahren zum Erkennen eines Hindernisses beim Rückwärtsfahren eines Fahrzeugs von einem Bild eines hinteren Bereichs des Fahrzeugs, wobei das Verfahren Folgendes umfasst:
einen Differenzbild-Erzeugungsschritt des Erzeugens eines Differenzbildes zwischen einem Bild, das erzeugt wird, wenn die Bremslichter des Fahrzeugs eingeschaltet sind, und einem Bild, das erzeugt wird, wenn die Bremslichter des Fahrzeugs ausgeschaltet sind; und
einen Hindernisbestimmungsschritt des Bestimmens, ob ein Hindernis vorhanden ist, auf der Grundlage einer Stelle in einem Bild, an der ein Unterschied in dem Differenzbild auftritt,
**dadurch gekennzeichnet, dass** der Hindernisbestimmungsschritt bestimmt, dass ein Hindernis vorhanden ist, wenn eine Differenz in Bildern in einem Abschnitt oberhalb einer Position einer horizontalen Linie in einem Bild auftritt.

## Revendications

1. Appareil de détection d'obstacle (20) qui détecte, lors de la marche arrière d'un véhicule, un obstacle à partir d'une image d'une zone arrière du véhicule, l'appareil de détection d'obstacle comprenant :
une unité de création d'image de différence (23) qui crée une image de différence entre une image capturée lorsque des feux de freinage du véhicule sont allumés et une image capturée lorsque les feux de freinage du véhicule sont éteints ; et
une unité de détermination d'obstacle (26) qui détermine s'il existe un obstacle, sur la base d'un emplacement dans une image où une différence apparaît dans l'image de différence,
**caractérisé en ce que**
l'unité de détermination d'obstacle (26) détermine qu'il existe un obstacle, lorsqu'une différence dans les images apparaît dans une partie au-dessus d'une position d'une ligne horizontale dans une image.

2. Appareil de détection d'obstacle selon la revendication 1, dans lequel l'unité de détermination d'obstacle (26) obtient des informations d'angle de gouvernail du véhicule à partir du véhicule, et détermine selon des informations d'angle de gouvernail s'il existe un obstacle, en ciblant seulement une région de déplacement de véhicule dans une image où il existe une possibilité que le véhicule se déplace.

3. Appareil de détection d'obstacle selon l'une quelconque des revendications 1 à 2, dans lequel
l'appareil de détection d'obstacle obtient des informations sur un état allumé/éteint des feux de freinage du véhicule à partir du véhicule, et
sur la base des informations sur un état allumé/éteint des feux de freinage, l'unité de création d'image de différence crée une image de différence entre une image capturée lorsque les feux de freinage du véhicule sont allumés et une image capturée lorsque les feux de freinage du véhicule sont éteints.

4. Appareil de détection d'obstacle selon l'une quelconque des revendications 1 à 3, dans lequel l'unité de création d'image de différence (23) crée une image de différence représentant une différence dans une composante rouge dans une image.

5. Appareil de détection d'obstacle selon l'une quelconque des revendications 1 à 4, comprenant en outre une unité de division de bloc (22) qui divise une image en une pluralité de blocs et qui détermine une valeur représentative pour chaque bloc, dans lequel
l'unité de création d'image de différence (23) obtient, comme étant l'image de différence, une différence entre une valeur représentative pour chaque bloc dans une image capturée lorsque les feux de freinage du véhicule sont allumés, et une valeur représentative pour chaque bloc dans une image capturée lorsque les feux de freinage du véhicule sont éteints, les valeurs représentatives étant déterminées par l'unité de division de bloc.

6. Système de détection d'obstacle comprenant :
un appareil de formation d'image qui filme une zone arrière d'un véhicule lors d'une marche arrière du véhicule ; et
un appareil de détection d'obstacle selon l'une quelconque des revendications 1 à 5 qui détecte un obstacle à partir d'une image capturée avec l'appareil de formation d'image.

7. Système de détection d'obstacle selon la revendication 6, dans lequel l'appareil de formation d'image comporte un mécanisme de commande d'exposition qui commande une condition d'exposition de l'appareil de formation d'image de sorte qu'une image obtenue lorsque des feux de freinage sont allumés et qu'une image obtenue lorsque les feux de freinage sont éteints aient une même condition d'exposition, les images créant une image de différence dans une unité de création d'image de différence.

8. Procédé de détection d'obstacle permettant de détecter, lors de la marche arrière d'un véhicule, un obstacle à partir d'une image d'une zone arrière du véhicule, le procédé comprenant :
une étape de création d'image de différence qui consiste à créer une image de différence entre une image capturée lorsque des feux de freinage du véhicule sont allumés et une image capturée lorsque les feux de freinage du véhicule sont éteints ; et
une étape de détermination d'obstacle qui consiste à déterminer s'il existe un obstacle, sur la base d'un emplacement dans une image où une différence apparaît dans l'image de différence,
**caractérisé en ce que** l'étape de détermination d'obstacle détermine qu'il existe un obstacle, lorsqu'une différence dans les images apparaît dans une partie au-dessus d'une position d'une ligne horizontale dans une image.
